# EUROPEAN PATENT APPLICATION

(11) **EP 4 827 141 A1**
(43) Date of publication of application: **21.10.2026**
(21) Application number: 24902768.1
(22) Date of filing: 09.12.2024
(51) Int. Cl.: H04W 12/04, H04W 12/03

(54) **COMMUNICATION METHOD AND APPARATUS, AND COMPUTER READABLE STORAGE MEDIUM**

(30) Priority: 14.12.2023 CN 202311731505
(71) Applicant: Spreadtrum Communications (Shanghai) Co., Ltd., Shanghai 201203 (CN)
(72) Inventor: LIU, Xing, Shanghai 201203 (CN)
(74) Representative: Patentanwälte Ruff, Wilhelm, Beier, Dauster & Partner mbB
(86) International application number: PCT/CN2024/137854
(87) International publication number: WO 2025/124347

(57) **Abstract**

A communication method and apparatus, and a computer readable storage medium, relating to the technical field of communications. The method comprises: receiving request information, the request information being used for requesting a first service; and sending key information, the key information being used for indicating a first key, and the first key being used for encrypting data of the first service transmitted between a network element node and a terminal device. By means of the solution of the present disclosure, a proper encryption mechanism can be provided for a service-based RAN architecture, and data between a core network element and a terminal device can still be guaranteed to be securely transmitted without passing through an AMF.

## Description

The present application claims priority to CN Patent Application No. 202311731505.0, entitled "COMMUNICATION METHOD AND APPARATUS, AND COMPUTER READABLE STORAGE MEDIUM", filed with the China National Intellectual Property Administration on December 14, 2023, the entirety of which is incorporated herein by reference.

### TECHNICAL FIELD

The present application relates to the field of communication technology, and particularly to a communication method and apparatus, and computer readable storage medium.

### BACKGROUND

At present, the interaction between a terminal device and a network element of a core network needs to be forwarded through the Access and Mobility Management Function (AMF), and its security is guaranteed by the encryption mechanism of the AMF.

In the future, it is highly possible that a service-based radio access network (RAN) may be introduced, where the nested relationship between the core network element and the AMF will be broken, and a terminal device may interact directly with the core network element without going through the AMF. In that case, the service between the terminal device and the core network element may no longer be encrypted by AMF, and thus its security cannot be guaranteed.

### SUMMARY

The present application intends to solve the technical problem of how to guarantee the security of a service in a service-based RAN architecture.

To solve the aforementioned technical problem, an embodiment of the present application provides a communication method, which comprises: receiving request information, wherein the request information is used for requesting a first service; sending key information, wherein the key information indicates a first key, the first key being used for encrypting data of the first service transmitted between a network element node and a terminal device.

Optionally, the sending key information comprises: sending first information to the network element node, wherein the first information comprises the first key.

Optionally, the method further comprises, before sending the first information to the network element node: selecting the network element node from a plurality of candidate network element nodes, wherein the plurality of candidate network element nodes are associated with the first service.

Optionally, the sending key information comprises: sending second information to the terminal device, wherein the second information comprises input parameters for generating the first key.

Optionally, the input parameters comprise: an identifier of the network element node and/or an address of the network element node.

Optionally, the request information is received from a server or the terminal device.

Optionally, the network element node is selected from: a location management function node and a sensing function node.

To solve the aforementioned technical problem, an embodiment of the present application further provides a communication method, which comprises: receiving key information, wherein the key information indicates a first key, the first key being used for encrypting data of a first service transmitted between a network element node and a terminal device; processing the data of the first service using the first key, and transmitting the processed data to the network element node via a wireless access network.

Optionally, the receiving key information comprises: receiving second information, wherein the second information comprises input parameters for generating the first key.

Optionally, the input parameters comprise: an identifier of the network element node and/or an Internet Protocol address of the network element node.

Optionally, the method further comprises: sending request information, wherein the request information is used for requesting the first service.

To solve the aforementioned technical problem, an embodiment of the present application further provides a communication method, which comprises: receiving key information, wherein the key information indicates a first key, the first key being used for encrypting data of a first service transmitted between a network element node and a terminal device; processing the data of the first service using the first key, and transmitting the processed data to the terminal device via a wireless access network.

Optionally, the receiving key information comprises: receiving first information, wherein the first information comprises the first key.

Optionally, the network element node is selected from: a location management function node and a sensing function node.

To solve the aforementioned technical problem, an embodiment of the present application provides a communication apparatus, which comprises: a receiving module for receiving request information, wherein the request information is used for requesting a first service; a sending module for sending key information, wherein the key information indicates a first key, the first key being used for encrypting data of the first service transmitted between a network element node and a terminal device.

To solve the aforementioned technical problem, an embodiment of the present application further provides a communication apparatus, which comprises: a receiving module for receiving key information, wherein the key information indicates a first key, the first key being used for encrypting data of a first service transmitted between a network element node and a terminal device; a transmitting module for processing the data of the first service using the first key, and transmitting the processed data to the network element node via a wireless access network.

To solve the aforementioned technical problem, an embodiment of the present application further provides a communication apparatus, which comprises: a receiving module for receiving key information, wherein the key information indicates a first key, the first key being used for encrypting data of a first service transmitted between a network element node and a terminal device; a transmitting module for processing the data of the first service using the first key, and transmitting the processed data to the terminal device via a wireless access network.

To solve the aforementioned technical problem, an embodiment of the present application further provides a computer readable storage medium which is a non-volatile storage medium or a non-transitory storage medium. The computer readable storage medium stores thereon a computer program, which, when executed by a processor, performs steps of the aforementioned methods.

To solve the aforementioned technical problem, an embodiment of the present application further provides a communication apparatus including a memory and a processor. The memory stores thereon computer programs executable on the processor. The processor, when executing the computer programs, performs steps of the aforementioned methods.

Compared with the prior art, the technical solutions of embodiments of the present application provide the following beneficial effects.

An embodiment of the present application provides a communication method at the AFM side, which comprises: receiving request information, wherein the request information is used for requesting a first service; sending key information, wherein the key information indicates a first key, the first key being used for encrypting data of the first service transmitted between a network element node and a terminal device.

Compared to the prior art where the AMF serves as an intermediate node to perform encryption when forwarding a message/data between a terminal device and a core network element, the first service involved in this embodiment is a service conducted in a service-based RAN architecture. Since the AMF does not serve as a data relay in this case, key information is sent to both communicating parties (e.g., the terminal device and the network element node) to ensure that each party is able to correctly encrypt or decrypt the transmitted data. Thus, a suitable encryption mechanism is provided for a service-based RAN architecture, guaranting security in case that data transmission between the core network element and the terminal device does not pass through AMF.

At the terminal device side, an embodiment of the present application further provides a communication method, which comprises: receiving key information, wherein the key information indicates a first key, the first key being used for encrypting data of a first service transmitted between a network element node and a terminal device; processing the data of the first service using the first key, and transmitting the processed data to the network element node via a wireless access network.

Compared to the prior art where the terminal device only needs to transmit or receive data which is encrypted or decrypted by the AMF, this embodiment indicates the first key configured at the AMF side to the terminal device, enabling the terminal device to correctly encrypt or decrypt transmitted data during communication with the network element node through the RAN. Thus, a suitable encryption mechanism is provided for a service-based RAN architecture, guaranting security in case that data transmission between the core network element and the terminal device does not pass through AMF.

At the core network side, an embodiment of the present application further provides a communication method, which comprises: receiving key information, wherein the key information indicates a first key, the first key being used for encrypting data of a first service transmitted between a network element node and a terminal device; processing the data of the first service using the first key, and transmitting the processed data to the terminal device via a wireless access network.

Compared to the prior art where the network element node only needs to transmit or receive data which is encrypted or decrypted by the AMF, this embodiment indicates the first key configured at the AMF side to the network element node, enabling the network element node to correctly encrypt or decrypt transmitted data during communication with the terminal device through the RAN. Thus, a suitable encryption mechanism is provided for a service-based RAN architecture, guaranting security in case that data transmission between a core network element and a terminal device does not pass through the AMF.

### BRIEF DESCRIPTION OF THE DRAWINGS

FIG. 1 is a schematic diagram of an architecture of a first service-based RAN of the present application;
FIG. 2 is a schematic diagram of an architecture of a second service-based RAN of the present application;
FIG. 3 is a schematic diagram of an architecture of a third service-based RAN of the present application;
FIG. 4 is a signaling interaction diagram of a communication method in an embodiment of the present application;
FIG. 5 is a schematic structural diagram of a communication apparatus in an embodiment of the present application;
FIG. 6 is a schematic structural diagram of another communication apparatus in an embodiment of the present application;
FIG. 7 is a schematic structural diagram of a further communication apparatus in an embodiment of the present application.

### DETAILED DESCRIPTION

As mentioned in the Background, in the service-based RAN architecture, the existing encryption function implemented by the AMF is no longer applicable, and the security of a service between a terminal device and a core network element cannot be guaranteed.

Specifically, in the prior art, the interaction between a terminal device and a network element of the core network is forwarded by the AMF. Taking the location service as an example, there is no direct interface between the location management server (also known as Location Management Function, LMF) and the terminal device. For the security of a service, data of the location service (e.g., including a location request and a location report) needs to be encrypted. Since the interaction between the terminal device and the LMF passes through the AMF, it may be encrypted by the AMF.

Considering that 6G will introduce a service-based architecture, wherein one option is for the RAN to directly access the core network without the need for forwarding by the AMF. Therefore, a new encryption mechanism needs to be designed for the service-based RAN architecture.

To solve the aforementioned technical problem, an embodiment of the present application provides a communication method, which comprises: receiving request information, wherein the request information is used for requesting a first service; sending key information, wherein the key information indicates a first key, the first key being used for encrypting data of the first service transmitted between a network element node and a terminal device.

The first service involved in this embodiment is a service conducted in a service-based RAN architecture. Since the AMF does not serve as a data relay in this case, key information is sent to both communicating parties (e.g., the terminal device and the network element node) to ensure that each party is able to correctly encrypt or decrypt the transmitted data. Thus, a suitable encryption mechanism is provided for a service-based RAN architecture, guaranting security in case that data transmission between a core network element and a terminal device does not pass through the AMF.

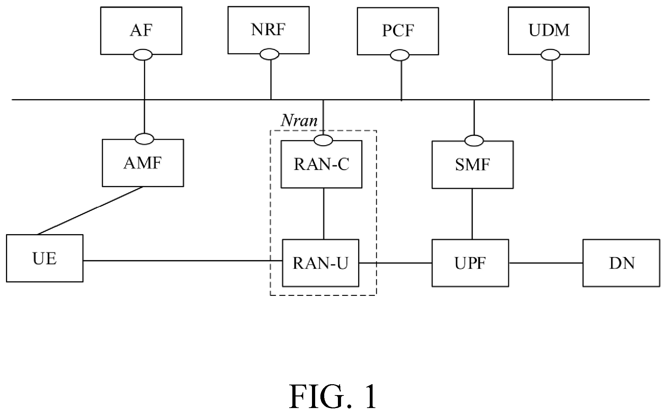

In embodiments of the present application, a service-based RAN architecture may be as shown in any of FIG. 1 to FIG. 3.

FIG.1 exemplarily illustrates a network architecture with a full service-based N2 interface, enabling direct service invocation between a RAN Network Function (RAN NF) and a Core Network NF (CN NF). Specifically, a terminal device (denoted as UE in FIG. 1) may access the bus (i.e., access the core network) via the AMF. Furthermore, the terminal device may also directly access the core network via RAN, thus breaking through the existing mechanism that relies solely on the AMF for forwarding. The RAN comprises a control plane RAN (denoted as RAN-C in FIG. 1) and a user plane RAN (denoted as RAN-U in FIG. 1). Moreover, in the architecture shown in FIG. 1, the Application Function (AF), the Network Repository Function (NRF), the Policy Control Function (PCF), and the Unified Data Management (UDM) at the core network side also directly access the bus. Furthermore, the User Plane Function (UPF) and the Data Network (DN) may access the bus via the Session Management Function (SMF).

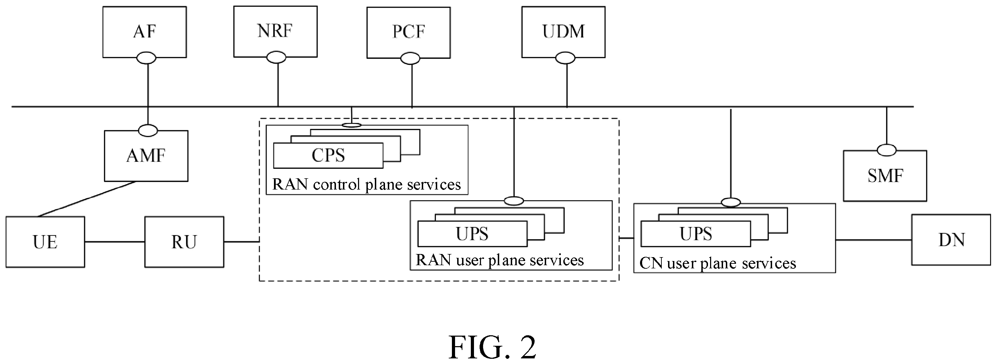

FIG. 2 exemplarily illustrates a service-based network architecture for traditional RAN functions, where functions (also known as RAN capabilities) are split into services, and an integration design of RAN-related and CN-related functional services and processes is further implemented to better meet the design principles of high cohesion and loose coupling, simplifying the network design. Specifically, a terminal device (denoted as UE in FIG. 2) may access the bus via the AMF. Furthermore, the terminal device may also access the RAN via a Radio Unit (RU) and directly access the core network via the RAN, where the RU is responsible for processing digital front-end (DFE) and some physical (PHY) layer functions. Additionally, the RAN is split into RAN control plane services (implemented based on Control Plane Service, CPS) and RAN user plane services (implemented based on User Plane Service, UPS). Furthermore, a core network user plane service (implemented based on UPS) is set up to communicate with the RAN and directly access the bus. Additionally, other core network elements, such as AF, NRF, PCF, and UDM, directly access the bus. Furthermore, SMF may also directly access the bus. Furthermore, DN accesses the bus via the core network user plane service.

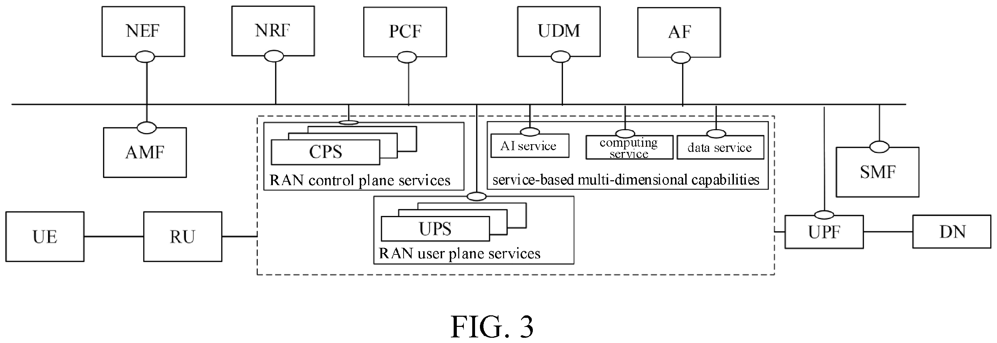

FIG. 3 exemplarily illustrates a service-based network architecture for newly-added DOICT capabilities. This architecture defines functions, such as artificial intelligence (AI), computing, and data, as services. Specifically, DOICT simplifies networking of an on-site network via communication technology (CT); achieves high reliability by deep collaboration with industrial protocols via operational technology (OT); realizes intelligence via data technology (DT), guaranting a low-latency experience by a closed loop; and enables more industrial applications via information technology (IT), reducing construction costs and achieving flexible networking. Specifically, the terminal device accesses RAN via the RU and directly accesses the core network via RAN. Furthermore, the RAN is split into RAN control plane services (implemented based on Cyber-Physical System (CPS)), RAN user plane services (implemented based on User Physical System (UPS)), and service-based multi-dimensional capabilities (including AI service, computing service, and data service). Additionally, the AMF accesses the bus and is decoupled from the terminal device. Additionally, other core network elements, such as Network Exposure Function (NEF), AF, NRF, PCF, and UDM, directly access the bus. Furthermore, SMF may also directly access the bus. Furthermore, DN accesses the bus via UPF, which communicates with RAN.

In embodiments of the present application, the network element node may be a core network element that performs functions related to a first service. The first service may be a service implemented based on the service-based RAN architecture. For example, the first service may be a location service, and the corresponding network element node may be a Location Management Function (LMF) node (abbreviated as SMF). As another example, the first service may be a sensing service, and the corresponding network element node may be a Sensing Function (SF) node (abbreviated as SF).

In embodiments of the present application, although the AMF no longer forwards data between a terminal device and a network element node, it still performs a management function.

To make the above objectives, features, and beneficial effects of the present application more evident and understandable, the specific embodiments of the present application will be described in detail below with reference to the drawings.

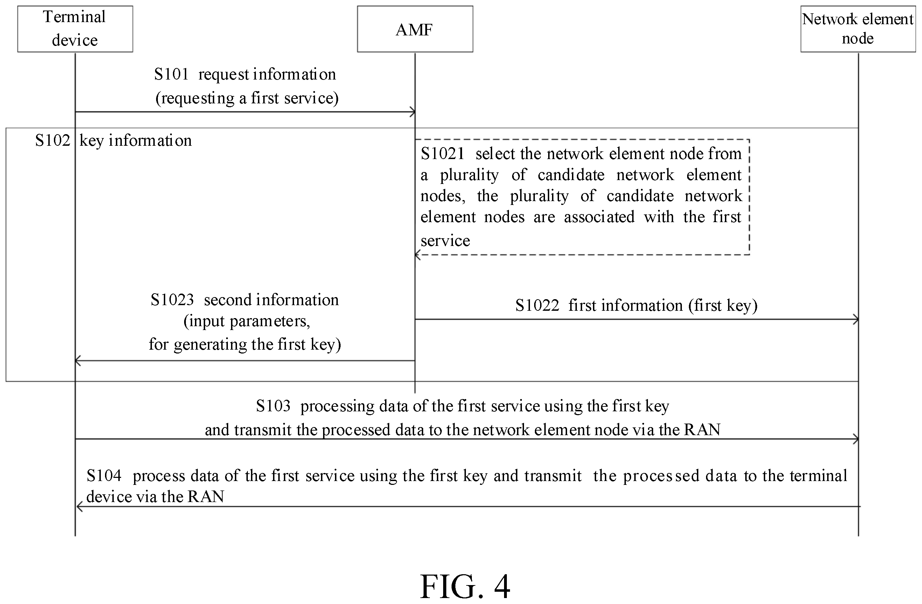

FIG. 4 is a signaling interaction diagram of a communication method in an embodiment of the present application.

This embodiment may be applied to communication scenarios in a service-based RAN architecture, where a terminal device directly interacts with a network element node via RAN to transmit data of a first service, without going through the AMF.

In a specific implementation, in the communication method comprising the following steps S101 to S102, the steps implemented by the terminal device may be executed by a chip with communication functionality in the terminal device, or by a baseband chip in the terminal device; the steps implemented by the AMF may be executed by a chip with communication functionality in the AMF, or by a baseband chip in the AMF; the steps implemented by the network element node may be executed by a chip with communication functionality in the network element node, or by a baseband chip in the network element node.

Specifically, referring to FIG. 4, the communication method described in this embodiment may include the following steps:
Step S101, the terminal device sends request information to the AMF. Correspondingly, the AMF receives the request information. The request information is used for requesting a first service.

For example, the first service may be a location service, and correspondingly, the request information may be location request information.

In some embodiments, the terminal device may actively trigger the sending of request information.

In some embodiments, a server may trigger the terminal device to send request information to the AMF. The server, for example, may be an external server used for implementing the first service.

In some embodiments, the server may send the request information directly to the AMF.

In some embodiments, the first service requested may be either an uplink service or a downlink service.

In some embodiments, the request information may include relevant information for implementing the first service, such as an identifier of the terminal device (used for uniquely identifying the terminal device) and Quality of Service (QoS).

Still taking the terminal device requesting the location service as an example, the location request information sent in step S101 may include the identifier of the terminal device and the QoS of the location (such as the accuracy requirements and latency requirements, etc., for location).

In a specific implementation, referring to FIG. 4, in response to receiving the request information, the AMF may perform step S102 to send key information to the terminal device and the network element node respectively. Correspondingly, the network element node and the terminal device each receive the key information. The key information indicates a first key, the first key being used for encrypting data of the first service transmitted between the network element node and the terminal device.

In some embodiments, for the interaction between the network element node and the AMF, step S102 may specifically include steps S1021 and S1022.

In step S1021, the AMF selects the network element node from a plurality of candidate network element nodes, wherein the plurality of candidate network element nodes are associated with the first service.

Specifically, the core network may deploy a plurality of network element nodes for the first service, and these network element nodes serve as candidate network element nodes. Upon receiving the request information, the AMF selects one of the plurality of candidate network element nodes as the network element node that communicates with the terminal device.

Still taking the location request information as an example, the AMF may select the nearest one from a plurality of candidate LMFs as the LMF that communicates with the terminal device to implement the location service.

For another example, the request information may be used for requesting a sensing service, and the AMF may select one of a plurality of candidate SFs as the SF that communicates with the terminal device to implement the sensing service.

Furthermore, after the network element node is determined, the AMF may proceed to step S1022 to send first information to the network element node. Correspondingly, the network element node receives the first information. The first information includes a first key.

Thus, the AMF directly provides the generated first key to the network element node.

In some embodiments, the first keys allocated to different candidate network element nodes may be mutually distinct.

In a specific implementation, for the interaction between the terminal device and the AMF, step S102 may specifically include step S1023, where the AMF sends second information to the terminal device. Correspondingly, the terminal device receives the second information. The second information includes input parameters which are used for generating the first key.

Specifically, some of the input parameters may be pre-configured by the network, predefined by the protocol, or determined autonomously by the terminal device, while the remaining of the input parameters (such as parameters related to the network element node) may be indicated to the terminal device by the AMF.

Still taking the first service being the location service as an example, the input parameters required in derivation of the key of LMF (KLMF) may include:
- FC = 0x6E, used for distinguishing different derivation algorithms;
- P0 = Uplink/Downlink Non-Access Stratum (NAS) COUNT, which is a sequence number used for signaling transmission between the terminal device and AMF;
- L0 = length of uplink/downlink NAS COUNT, for example, 0x00 0x04;
- P1 = Network function distinguisher, used for distinguishing different network functions;
- L1 = length of Network function distinguisher, for example, 0x00 0x01.

In some embodiments, the input parameters carried in the second information may include the parameter P1. Since the parameter P1 is used for distinguishing different network functions, it may also be referred to as an identifier (in this example, it may be understood as a type identifier) of the network element node, to distinguish network element nodes with different functions. For example, the P1 value corresponding to LMF is 0x01, and the P1 value corresponding to SF is 0x02.

In a variation, the content of the parameter P1 may be the identity identification (ID) of the network element node, which is used for uniquely identifying a candidate network element node. For example, a plurality of candidate LMFs are included at the core network side, and each of the candidate LMFs is assigned a unique ID. The AMF selects one from the plurality of candidate LMFs, and indicates the ID of the selected LMF to the terminal device via the second information.

In a variation, the content of the parameter P1 may be replaced by a network function address, and correspondingly, the content of the parameter L1 may be replaced by the length of the network function address.

The address of the network element node may be, for example, an Internet Protocol (IP) address, or a Media Access Control (MAC) address.

In another variation, besides the parameter P1, the input parameters required in the derivation of the key of LMF (KLMF) may further include P2=network function address and L2=length of the network function address. Furthermore, the second information may include both the parameter P1 and the parameter P2.

In a specific implementation, the AMF indicates the identifier (including a type identifier and/or an identity identification) and/or address of the network element node associated with the first service in the second information, for the terminal device to generate the first key for interaction with the network element node.

For example, in response to receiving the second information, the terminal device calculates KAMF based on the K value configured in the Universal Subscriber Identity Module (USIM) and dynamic parameters provided by the network, and further calculates the first key in combination with the input parameters, including the content carried in the second information (such as P1 and/or P2) and the content determined by the terminal device itself.

In some embodiments, the action of sending the second information to the terminal device (corresponding to step S1023) may be performed before/after/simultaneously with the action of sending the first information to the network element node (corresponding to steps S1021 and S1022).

In a specific implementation, in response to receiving the first information and the second information respectively, the network element node and the terminal device may use the first key to communicate directly via the RAN.

Specifically, in response to receiving the second information, the terminal device may perform step S103 to process data of the first service using the first key and transmit the processed data to the network element node via the RAN.

Similarly, in response to receiving the first information, the network element node may perform step S104 to process data of the first service using the first key and transmit the processed data to the terminal device via the RAN.

In a variation, step S101 may be omitted, and the AMF may actively send key information to the terminal device upon its access. Furthermore, the AMF may also actively send key information to the network element node corresponding to the first service that the terminal device needs to implement.

In a variation, step S102 may be omitted. For example, if there is only one network element node associated with the first service, the AMF may directly proceed to step S103 to send key information to that network element node.

From the above, the AMF sends key information to both communicating parties (e.g., the terminal device and the network element node), to ensure that both parties may correctly encrypt or decrypt the transmitted data. In response to receiving the key information (e.g., the second information), the terminal device may correctly encrypt or decrypt transmitted data during communication with the network element node via the RAN. In response to receiving the key information (e.g., the first information), the network element node may correctly encrypt or decrypt transmitted data during communication with the terminal device via the RAN. Thus, a suitable encryption mechanism is provided for a service-based RAN architecture, guaranting security in case that data transmission between a core network element and a terminal device does not pass through the AMF.

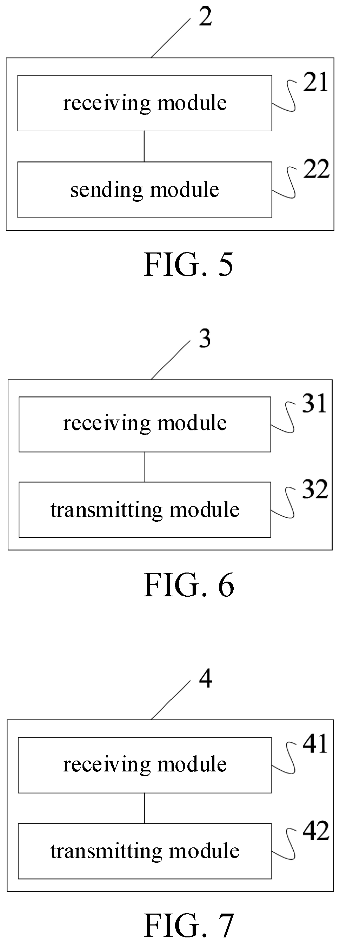

FIG. 5 is a schematic structural diagram of a communication apparatus 2 in an embodiment of the present application. Those skilled in the art understand that the communication apparatus 2 described in this embodiment may be used for implementing the method described in the embodiments shown above in FIG. 1 to FIG. 4.

Specifically, the communication apparatus 2 described in this embodiment may comprise: a receiving module 21 for receiving request information, wherein the request information is used for requesting a first service; a sending module 22 for sending key information, wherein the key information indicates a first key, the first key being used for encrypting data of the first service transmitted between a network element node and a terminal device.

For more details about the working principle and mode of the communication apparatus 2, please refer to the relevant descriptions in FIG. 1 to FIG. 4 mentioned above, which will not be repeated here.

In a specific implementation, the aforementioned communication apparatus 2 may correspond to a chip with communication functionality in a network device, or to a chip with data processing capabilities, such as a System-On-Chip (SOC) or a baseband chip; or to a chip module in a network device that includes a chip with communication functionality; or to a chip module with a chip capable of data processing, or to a network device. In this example, the network device may be, for instance, AMF.

FIG. 6 is a schematic structural diagram of another communication apparatus 3 in an embodiment of the present application. Those skilled in the art understand that the communication apparatus 3 described in this embodiment may be used for implementing the method described in the embodiments shown above in FIG. 1 to FIG. 4.

Specifically, referring to FIG. 6, the communication apparatus 3 described in this embodiment may comprise: a receiving module 31 for receiving key information, wherein the key information indicates a first key, the first key being used for encrypting data of a first service transmitted between a network element node and a terminal device; a transmitting module 32 for processing the data of the first service using the first key, and transmitting the processed data to the network element node via a wireless access network.

For more details about the working principle and mode of the communication apparatus 3, please refer to the relevant descriptions in FIG. 1 to FIG. 4 mentioned above, which will not be repeated here.

In a specific implementation, the aforementioned communication apparatus 3 may correspond to a chip with communication functionality in a terminal device, or to a chip with data processing capabilities, such as a System-On-Chip (SOC) or a baseband chip; or to a chip module in a terminal device that includes a chip with communication functionality; or to a chip module with a chip capable of data processing, or to a terminal device.

FIG. 7 is a schematic structural diagram of a further communication apparatus 4 in an embodiment of the present application. Those skilled in the art understand that the communication apparatus 4 described in this embodiment may be used for implementing the method described in the embodiments shown above in FIG. 1 to FIG. 4.

Specifically, referring to FIG. 7, the communication apparatus 4 described in this embodiment may comprise: a receiving module 41 for receiving key information, wherein the key information indicates a first key, the first key being used for encrypting data of a first service transmitted between a network element node and a terminal device; a transmitting module 42 for processing the data of the first service using the first key, and transmitting the processed data to the terminal device via a wireless access network.

For more details about the working principle and mode of the communication apparatus 4, please refer to the relevant descriptions in FIG. 1 to FIG. 4 mentioned above, which will not be repeated here.

In a specific implementation, the aforementioned communication apparatus 4 may correspond to a chip with communication functionality in a network device, or to a chip with data processing capabilities, such as a System-On-Chip (SOC) or a baseband chip; or to a chip module in a network device that includes a chip with communication functionality; or to a chip module with a chip capable of data processing, or to a network device. In this example, the network device may be, for instance, a core network element (i.e., a network element node).

In a specific implementation, the various modules/units included in each apparatus or product described in the above embodiments may be software modules/units, hardware modules/units, or partly software modules/units and partly hardware modules/units.

For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal, each module/unit included may be implemented in hardware such as circuits, different modules/units may be located in the same component (e.g., chip, circuit module, etc.) or different components of the terminal, or at least some modules/units may be implemented by software programs executing on a processor integrated into the terminal, and the remaining (if any) modules/units may be implemented in hardware such as circuits.

An embodiment of the present application further provides a computer readable storage medium which is a non-volatile storage medium or a non-transitory storage medium. The computer readable storage medium stores thereon a computer program, which, when executed by a processor, implements steps of the communication method provided in any of the aforementioned embodiments. Preferably, the storage medium may comprise a computer readable storage medium, such as a non-volatile memory or a non-transitory memory. The storage medium may include ROM, RAM, a magnetic disk, or an optical disk, etc.

An embodiment of the present application further provides another communication apparatus including a memory and a processor, the memory having a computer program executable on the processor stored thereon. The processor, when executing the computer program, performs the steps of the communication method provided in the embodiment corresponding to FIG. 4. The communication apparatus may be integrated into a terminal/network device, or alternatively, the communication apparatus may be, for example, a terminal/network device.

The technical solutions of the present application may be applicable to the fifth generation (5th Generation, 5G) communication system, as well as the fourth generation (4th Generation, 4G) and the third generation (3rd Generation, 3G) communication systems. It is also applicable to various future communication systems, such as the sixth generation (6th Generation, 6G), seventh generation (7th Generation, 7G), etc. The embodiments of the present application are not limited herein.

The technical solutions of the present application also are applicable to different network architectures, including but not limited to a relay network architecture, a dual-connectivity architecture, a Vehicle-to-Everything (V2X) architecture, Device-to-Device (D2D) communication, etc.

The devices in the embodiments of the present application include network devices and terminal devices.

The network devices in the embodiments of the present application include base stations and base station controllers of the access network, and may also include terminal devices.

The base station (BS) in the embodiments of the present application, also known as base station equipment, is a device deployed in the radio access network (RAN) to provide wireless communication functions. For example, the device providing functions of a base station in a 2G network includes a Base Transceiver Station (BTS). The device providing functions of a base station in a 3G network includes a NodeB. The device providing functions of a base station in a 4G network includes an evolved NodeB (eNB). The device providing functions of a base station in a Wireless Local Area Network (WLAN) is an Access Point (AP). The device providing functions of a base station in 5G New Radio (NR) is a gNB, and a next-generation evolved NodeB (ng-eNB), where the gNB communicates with a terminal device using NR technology, and the ng-eNB communicates with a terminal device using Evolved Universal Terrestrial Radio Access (E-UTRA) technology, and both the gNB and the ng-eNB may be connected to a 5G core network. The base station in the embodiments of the present application also encompasses a device providing functions of a base station in future new communication systems, etc.

The base station controller in the embodiments of the present application, which may also be referred to as a base station controller device, is an apparatus for managing base stations. For example, it may refer to the Base Station Controller (BSC) in 2G networks, the Radio Network Controller (RNC) in 3G networks, or it may also refer to an apparatus for controlling and managing base stations in future new communication systems.

The terminal device in the embodiments of the present application, which may also be referred to as a terminal, may refer to various forms of a User Equipment (UE), a access terminal device, a subscriber unit, a subscriber station, a Mobile Stations (MS), a remote station, a remote terminal device, a mobile device, a user terminal device, a wireless communication device, a user agent, or a user apparatus. The terminal device may also be a cellular phone, a cordless phone, a Session Initiation Protocol (SIP) phone, a Wireless Local Loop (WLL) station, a Personal Digital Assistant (PDA), a handheld device with wireless communication function, a computing device, or other processing devices connected to a wireless modem, an in-vehicle device, a wearable device, a terminal device in a future 5G network, or a terminal device in a future evolved Public Land Mobile Network (PLMN), etc. This is not limited in the embodiments of the present application.

Although the present application is disclosed as above, the present application is not limited thereto. Any person skilled in the art may make various changes and modifications without departing from the spirit and scope of the present application. Therefore, the protection scope of the present application shall be subject to the scope defined by the claims.

## Claims

1. A communication method, **characterized in that**, the communication method comprises:
receiving request information, wherein the request information is used for requesting a first service;
sending key information, wherein the key information indicates a first key, the first key being used for encrypting data of the first service transmitted between a network element node and a terminal device.

2. The method according to claim 1, **characterized in that**, the sending key information, comprises:
sending first information to the network element node, wherein the first information comprises the first key.

3. The method according to claim 2, **characterized in that**, the method further comprises, before sending the first information to the network element node:
selecting the network element node from a plurality of candidate network element nodes, wherein the plurality of candidate network element nodes are associated with the first service.

4. The method according to any one of claims 1 to 3, **characterized in that**, the sending key information, comprises:
sending second information to the terminal device, wherein the second information comprises input parameters for generating the first key.

5. The method according to claim 4, **characterized in that**, the input parameters comprise: an identifier of the network element node and/or an address of the network element node.

6. The method according to any one of claims 1 to 5, **characterized in that**, the request information is received from a server or the terminal device.

7. The method according to any one of claims 1 to 5, **characterized in that**, the network element node is selected from: a location management function node and a sensing function node.

8. A communication method, **characterized in that**, the communication method comprises:
receiving key information, wherein the key information indicates a first key, the first key being used for encrypting data of a first service transmitted between a network element node and a terminal device;
processing the data of the first service using the first key, and transmitting the processed data to the network element node via a wireless access network.

9. The method according to claim 8, **characterized in that**, the receiving key information, comprises:
receiving second information, wherein the second information comprises input parameters for generating the first key.

10. The method according to claim 9, **characterized in that**, the input parameters comprise: an identifier of the network element node and/or an Internet Protocol address of the network element node.

11. The method according to any one of claims 8 to 10, **characterized in that**, the method further comprises:
sending request information, wherein the request information is used for requesting the first service.

12. A communication method, **characterized in that**, the communication method comprises:
receiving key information, wherein the key information indicates a first key, the first key being used for encrypting data of a first service transmitted between a network element node and a terminal device;
processing the data of the first service using the first key, and transmitting the processed data to the terminal device via a wireless access network.

13. The method according to claim 12, **characterized in that**, the receiving key information, comprises:
receiving first information, wherein the first information comprises the first key.

14. The method according to claim 12 or 13, **characterized in that**, the network element node is selected from: a location management function node and a sensing function node.

15. A communication apparatus, **characterized in that**, the communication apparatus comprises:
a receiving module for receiving request information, wherein the request information is used for requesting a first service;
a sending module for sending key information, wherein the key information indicates a first key, the first key being used for encrypting data of the first service transmitted between a network element node and a terminal device.

16. A communication apparatus, **characterized in that**, the communication apparatus comprises:
a receiving module for receiving key information, wherein the key information indicates a first key, the first key being used for encrypting data of a first service transmitted between a network element node and a terminal device;
a transmitting module for processing the data of the first service using the first key, and transmitting the processed data to the network element node via a wireless access network.

17. A communication apparatus, **characterized in that**, the communication apparatus comprises:
a receiving module for receiving key information, wherein the key information indicates a first key, the first key being used for encrypting data of a first service transmitted between a network element node and a terminal device;
a transmitting module for processing the data of the first service using the first key, and transmitting the processed data to the terminal device via a wireless access network.

18. A computer readable storage medium storing a computer program thereon, the computer readable storage medium being a non-volatile storage medium or a non-transitory storage medium, **characterized in that**, the computer program, when executed by a processor, performs steps of the method according to any one of claims 1 to 14.

19. A communication apparatus, comprising a memory and a processor, wherein the memory stores thereon a computer program executable on the processor, **characterized in that**, the processor, when executing the computer program, performs steps of the method according to any one of claims 1 to 14.
